# EUROPEAN PATENT APPLICATION

(11) **EP 0 751 307 A2**
(43) Date of publication of application: **02.01.1997**
(21) Application number: 96304635.4
(22) Date of filing: 21.06.1996
(51) Int. Cl.: F16B 12/40, A47B 17/00

(54) **Improvements in and relating to furniture and other installations**

(30) Priority: 29.06.1995 GB 9513289
(71) Applicant: FLEXIFORM BUSINESS FURNITURE LIMITED, Bradford, West Yorkshire BD3 7AE (GB)
(72) Inventor: Law, Andrew Jonathan, Leeds, LS12 1VN West Yorkshire (GB); Wilson, Timothy Stephen George, Leeds, LS12 2PH West Yorkshire (GB)
(74) Representative: Sherrard-Smith, Hugh

(57) **Abstract**

A reinforcing insert 10 extends into a tube 12 and is limited into its extent into tube 12 by a lip 24. A bolt is threaded through the tube 12 and through a hole 14 in the insert 10. The bolt is then screwed into another construction element and tightened. A central member 38 resists compressive forces on the tube and also pivoting forces of a loading arm extending from the tube. Flanges 14 and 20 on the insert assist in resisting those forces and also assist in accurately locating the insert in the tube.*

## Description

### Field of the Invention

This invention relates to a strengthening member for construction elements. It is particularly, but not exclusively, concerned with strengthening hollow frame elements used in furniture construction.

Modern furniture is often in modular form comprising hollow section construction elements, for example in square and rectangular sections, used to produce a frame assembly which can support working surfaces, equipment, back screens or parts of other pieces of furniture. In assembling the construction elements it is convenient to bolt them together, bolts passing through fastening holes provided in the construction elements. In using bolts as fasteners, the person assembling the furniture has to be careful not to overtighten a bolt because this can crush a hollow section element.

It is known to strengthen hollow section construction elements by placing a piece of tubing in the hollow section of the construction element so that the hole through the tube coincides with fastening holes in the construction element. A bolt passes both through the fastening holes and the tubing. A disadvantage of this approach is that the piece of tubing can move around relative to the fastening holes before a bolt is inserted thus making the task of threading the bolt through the construction element and the piece of tubing difficult and fiddly.

### Summary of the Invention

According to a first aspect of the present invention, in a reinforcing insert for a hollow section construction element, the insert comprises at least one load bearing portion adapted to extend across and cooperate with opposing internal faces of a hollow construction element and a limiting portion adapted to limit the extent to which the insert can be inserted into a hollow construction element, the insert being configured to permit a fastening element to pass through said hollow construction element between said opposed internal faces, the insert being adapted to resist forces applied to a hollow construction element.

The term fastening element includes a screw, a bolt or another construction element connected to the construction element in which the insert may be located.

The or each load bearing portion may substantially prevent collapsing of the construction element on tightening of a fastening element, when the reinforcing insert is located in a construction element. The or each load bearing portion may also assist in locating the insert correctly in the construction element.

The load bearing portion may be arranged to extend in a substantially straight direction between opposed faces of a hollow construction element.

At at least one side the insert may be arranged to cooperate with an internal face of a hollow construction element, in a longitudinal extent of the hollow construction element, along a line that is arranged to pass through a fastening element, and the insert may be arranged to cooperate along that line on both sides of the fastening element.

Along the extent of the load bearing portion, between opposed faces of a hollow construction element, the load bearing portion may be arranged to be spaced from the hollow construction element at at least one, and preferably both sides of the load bearing portion.

The load bearing portion may be arranged to surround a fastening element during at at least part of the extent of the fastening element across the hollow construction element.

The insert may include at least one region where the load bearing portion is arranged to cooperate with an internal face of a hollow construction element a projection extending at an angle to the extent of the load bearing portion across a hollow section of a construction element. The projection may extend in one direction only from the load bearing portion. The projection may be arranged to cooperate with an internal face of a hollow construction element. The projection may extend to one or both sides of a region where a fastening element is arranged to pass through in the direction of elongate extent of a hollow construction element or to at least one side of a hollow construction element in a direction transverse to the elongate extent of a hollow construction element.

The projection may be arranged to cooperate with an inner side of a hollow construction element extending at an angle to opposed sides that the load bearing portion is arranged to cooperate with. The projection may include a substantially flat surface arranged to cooperate with a flat adjacent surface of an upwardly facing surface of a hollow construction element.

Each end of the load bearing portion may include a projection which projection from one end may extend in a different direction from the projection at the other end of the load bearing portion.

A load bearing portion and, alternatively or additionally, the projection, may extend along substantially the complete extent of the insert. Alternatively the load bearing portion and, additionally, the or each projection, may be localised or comprise a plurality of separate locations.

It will be appreciated that although the load bearing portion assists in the ability of the insert to resist forces applied to a hollow construction element, the projection or projections may also afford some resistance to those forces. Furthermore, the or each projection may assist in accurately aligning the insert within a hollow construction element.

The insert may be configured to enable two fastening elements to pass through a hollow construction element.

Preferably the limiting portion comprises a surface such as a lip adapted to abut an end of a construction element. Conveniently the limiting portion abuts substantially all of an end face of a hollow construction element.

Preferably the construction element with which the insert is arranged to cooperate comprises a section which is square, rectangular or polygonal. In the case of a polygonal construction element, the insert may comprise edges or sides against inside faces of the construction element bear.

Alternatively the section may be circular or elliptical. In the case of a circular or elliptical section the or each load bearing portion may be curved.

The insert may be provided with a bore adapted to receive a foot member on which a construction element will stand. The bore may be threaded. Alternatively the bore may be adapted to receive a support member for lighting, computer equipment, further structure of the desk or other articles.

According to a second aspect, the invention provides an assembly comprising a fastening element attached to a hollow section construction element reinforced with a reinforcing insert according to the first aspect of the invention.

The term assembly may include a desk or other piece of furniture or installation.

Hollow, with reference to the construction element, means substantially hollow. The section may be hollow along only a part of its length. It may only be hollow at the region the insert occupies.

The present invention includes any combination of the herein referred to features or limitations.

### Description of the Drawings

A reinforcing insert in accordance with the invention is described, by way of example only, with reference to the accompanying drawings, in which:
Figure 1 shows a perspective view of an insert according to the invention;
Figure 2 shows a side elevation of the insert of figure 1;
Figure 3 shows another side elevation of the insert of figure 1, the elevation being at 90 degrees to the elevation of figure 2;
Figure 4 shows a plan view of the lower end of the insert shown in the previous figures; and
Figure 5 shows a plan view of the upper end of the insert shown in the preceding figures located in a tube; and
Figure 6 shows a perspective view of a furniture leg carrying a cantilever support strut;
Figure 7 shows a perspective view of a desk top support;
Figure 8 shows a perspective view of another desk support and;
Figure 9 shows, in exploded perspective view, a desk incorporating the support of Figure 8.

### Description of the Preferred Embodiment

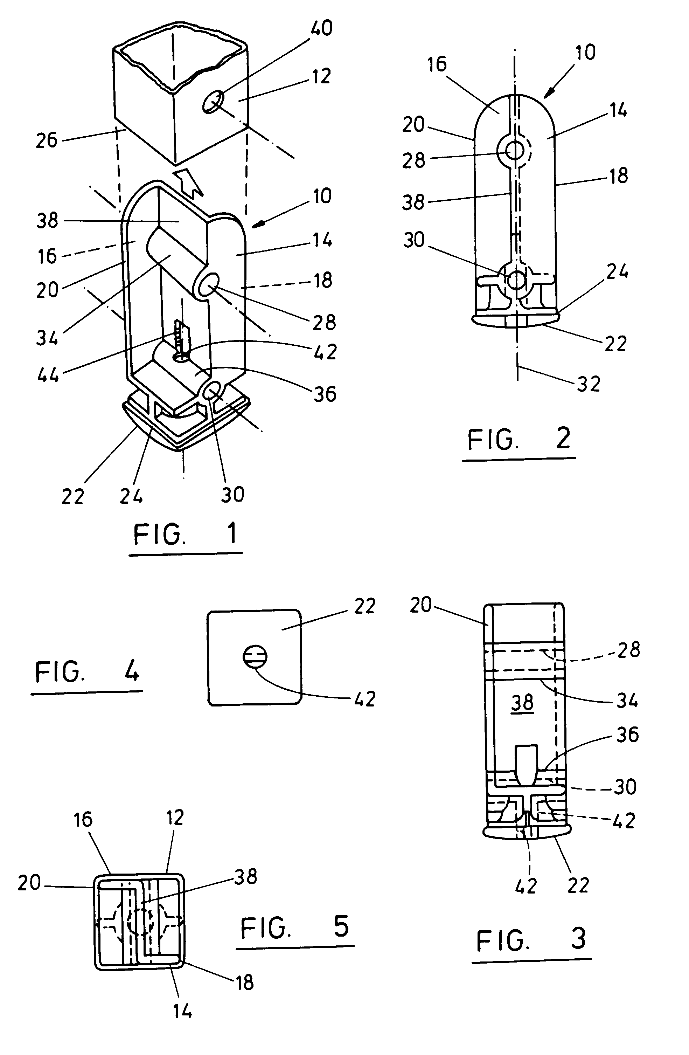

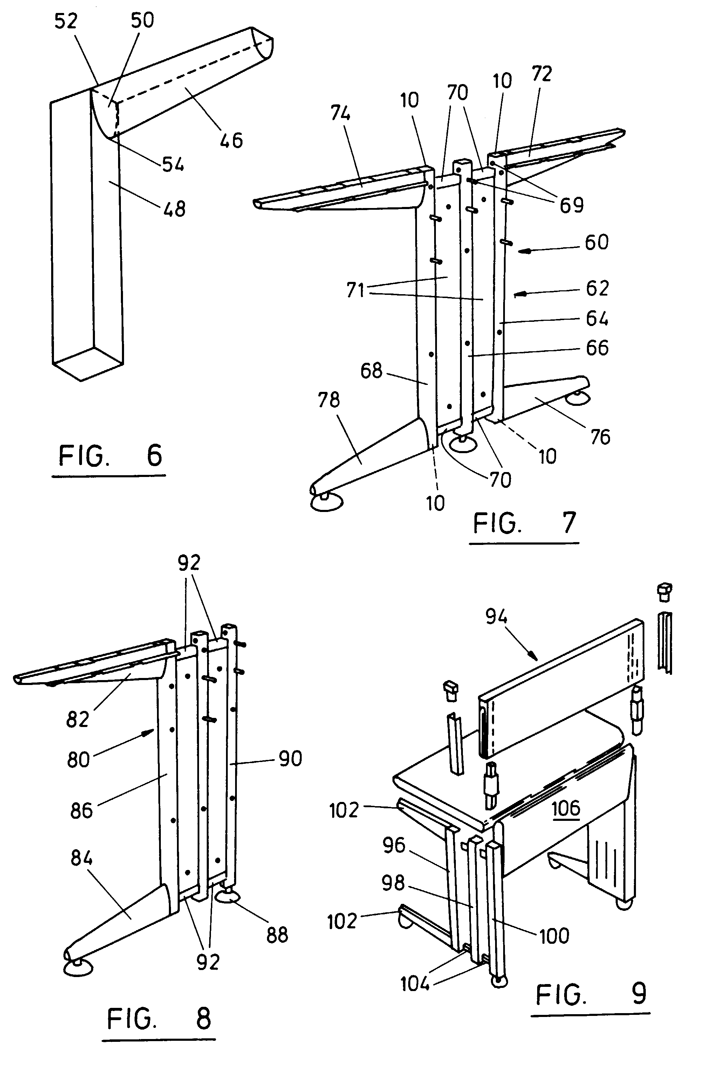

Figure 1 shows a reinforcing insert 10 for a hollow section construction element or tube 12 comprising at least one load bearing surface 14, 16 adapted to bear against the inside of the construction element 12 and a limiting surface or lip 24 adapted to limit the extent to which the insert 10 can be inserted into the construction element 12 in which the insert 10 is adapted to resist force applied to the outside of the construction element by a fastening element, such as a bolt. Alternatively the force may be applied by another construction element, such as a lateral support strut.

The tube is of square section and is part of the frame assembly for a piece of furniture and, in this embodiment, comprises the bottom end of a desk leg. The insert is comprised of glass filled nylon.

The load bearing surfaces or side faces 14, 16 bear against part of the internal surface of the tube 12. The side faces 14, 16 are provided with leading edges 18, 20 which also bear against part of the internal surface of the tube 12. As a result of engagement between the side faces 14, 16 and the leading edges 18, 20, the insert cannot move laterally with respect to the longitudinal axis of the tube 12 and the only permissible movement is sliding movement in and out of the tube. The faces 14, 16 and edges 18, 20 serve to locate the insert 10 centrally in the tube 12.

Insert 10 is provided with a domed base 22 around an upper edge of which the lip 24 extends. On full insertion of the insert 10 into the tube 12, the lip 24 abuts an end 26 of the tube 12. As a result of this abutment, the insert cannot be inserted any further into the tube 12.

The insert 10 is provided with bores 28, 30 which are disposed perpendicularly to a longitudinal axis 32 of the insert 10. The bores are comprised of circular tube formations 34, 36 which are integrally formed with a central member 38 from which the side faces 14, 16 extend as flanges. Holes 40 are provided in the tube 12 which are at positions which correspond to the bores 28, 30 when the insert 10 is fully inserted into the tube 12. In Figure 1, only one hole 40 is shown.

Another bore 42 is provided which is located on the longitudinal axis 32 of the insert 10. The bore 42 is provided with an internal screw thread 44 which is adapted to cooperate with an externally screw threaded rod (not shown) which extends into the bore 42. An end of the rod, which is external to the insert 10 when the rod is screwed into the bore, carries a foot on which the tube 12 can stand for instance when the bore 30 remains empty.

Once insert 10 has been inserted into the tube 12, a bolt is threaded through the insert 10 and the tube 12 such that it passes through a hole 40, the bore 28 and another hole 40. The bolt is screwed into another construction element, such as a lateral support strut and tightened. A second bolt is threaded through holes 40 and the bore 30 and also tightened. Location of bolts through the bores and holes fixes the insert in the tube 12 completely. However, the purpose of a bolt is not to fix the insert 10 in place, but it is to bolt additional construction elements onto the tube 12. These construction elements may be cantilever supports, frame members or other construction elements. For example, a bolt might pass through the tube 12 and thread onto a lateral support member, such as a strut, which is to support a sub-frame for a working surface. The purpose of the insert 10 is twofold, it strengthens the tube 12 against compressive forces acting on it by a fastening bolt, thus resisting collapsing of the tube 12, and also resists compressive forces which may be applied by loading of a lateral support strut which is bolted onto the tube 12. The loading of such a strut will be inclined to act around the bolt which would act as a pivot.

As shown in Figure 6, a lateral support member 46 is bolted onto a tube 48 which forms a furniture leg. Downward loading on the support member 46 applies a turning force in the region of contact 50 between an end 52 of the support member 46 and the tube 48. This produces a compressive load on the lower part of the region of contact 50. If the wall of the tube 48 is sufficiently thin, an edge 54 of the support member 46 can dig into the tube 48 and cause it to collapse locally. In order to overcome this problem in known modular furniture systems, the wall thickness of tubes forming a frame assembly is made sufficiently thick so as to resist crushing. Additionally it is necessary for the area of contact 50, or "foot print" to be chosen carefully to avoid loading by sharp corners or angles such as that formed by edge 54.

By providing an insert 10 according to the invention, the wall thickness of tubes making the frame can be reduced. Not only does the insert 10 prevent collapsing of the tube due to tightening of any bolts passing through the tube, but also strengthens the tube against collapsing caused by a loaded lateral support member having a turning moment applied to it.

As a result, furniture systems can be constructed of tubes having a thinner wall thickness which allows furniture so constructed to be lighter.

Furthermore, since the construction elements are much stronger when reinforced by inserts, less care is required in choosing the shape of lateral support members. It is not necessary to choose carefully lateral support members having "foot prints" which tend to cause little damage to construction elements. Therefore more choice of lateral support member is available allowing some aesthetic, hitherto impractical, designs to be used.

The insert 10 can fit into the lower end of a tube as described in the foregoing and provide a mount for a foot or can fit into the upper end of a tube and provide a mount for lighting, display screens, or back plates providing backing to the end of a desk opposing the edge at which a user sits. In each case the insert may serve to strengthen the tube against turning moment forces applied by loaded lateral support members mounted on the tube.

Figure 7 shows the invention in a second aspect providing an assembly 60 comprising a fastening element 69 attached to a hollow construction element 64, 66, 68 reinforced with a reinforcing element 10 according to the foregoing description. The assembly 60 is a side support for supporting the sub-frame of a desk top. A central pillar 62 comprises three parallel hollow leg members 64, 66, 68 which are bolted together. The leg members occupy the same plane. Fastening elements or bolts 69 are provided to connect support struts 72, 74 to the leg members 64, 66, 68. Filler panels 71 are provided in the spaces defined by the leg members 64, 66, 68 and cross pieces 70. Support struts 72, 74 extend laterally from the top of outer leg members 64, 68 and support struts 76, 78 extend laterally from the bottom of outer leg members 64, 68. As a result of loading of the support struts turning moments are applied to the struts which in turn apply compressive loading to the outer leg members 64, 68 at their upper and lower ends. The leg members are reinforced with inserts 10 at these regions. The central leg member 66 may also be reinforced by an insert 10 at one or both of its ends.

Figure 8 shows another side support 80. This is similar to side support 60 except that support struts 82, 84 are only provided on one leg member 86. It is to be noted that a foot 88 is now supported in an outer leg member 90 as opposed to the arrangement in Figure 7. In this embodiment inserts may again be provided in the end of each leg member 86, 90 for reinforcement. As can be seen there are a plurality of attachment points on each leg member to which construction elements may be connected, including lateral support members, cross pieces 92, and back plates. Many of these attachment points may need reinforcing.

As can be seen from Figures 7 and 8 a plurality of leg members can provide a number of points to which construction elements (including lateral support struts and cross pieces) can be attached. For example construction elements can be attached to any of the four faces of each square section construction element.

A lateral support member could extend perpendicularly to the plane occupied by the leg members. Such a lateral support member could be attached to any one of the leg members.

It is not necessary that a plurality of leg members are in the same or substantially the same plane.

Figure 9 shows a desk 94. It can be seen that a single leg member 96, 98, 100 can support one or more lateral support struts 102, cross pieces 104, or back plates 106. The ability to reinforce with the insert is advantageous. It allows for a large number of attachment points to be used, because reinforcement can be provided where necessary.

The side support comprising a plurality of pre-formed attachment points is an independent feature for which a separate patent protection may be sought.

The main feature of Figures 6 to 9 is that a bolt together frame assembly is provided which allows for a wide range of frames to be constructed. By including an insert which can strengthen the ends of tubes to enable a bolt to fasten onto or through the tube an easy bolt together construction is achieved.

Of course, the insert does not have to terminate close to the end of the tube in which it is fitted, but can extend outwardly and be provided with another insert formation onto which another tube can fit. Thus, the insert can be a bridging element between two tubes.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A reinforcing insert (10) for a hollow section construction element (12), the insert comprising at least one load bearing portion (38) adapted to extend across and cooperate with opposing internal faces of a hollow construction element and a limiting portion (24) adapted to limit the extent to which the insert can be inserted into a hollow construction element, the insert being configured to permit a fastening element to pass through said hollow construction element between said opposed internal faces, the insert being adapted to resist forces applied to a hollow construction element.

2. An insert as claimed in claim 1 in which the load bearing portion (38) is arranged to extend in a substantially straight direction between opposed faces of a hollow construction element.

3. An insert as claimed in any preceding claim in which at least one side of the insert (14, 16, 38) is arranged to cooperate with an internal face of a hollow construction element in a longitudinal extent of a hollow construction element, along a line that is arranged to pass through a fastening element.

4. An insert as claimed in claim 3 in which the insert is arranged to cooperate along that line on both sides of a fastening element.

5. An insert as claimed in any preceding claim in which, along the extent of a load bearing portion (38), between opposed faces of a hollow construction element, the load bearing portion is arranged to be spaced from a hollow construction element at at least one side of the load bearing portion.

6. An insert as claimed in any preceding claim in which the load bearing portion is arranged to surround (34, 36) a fastening element during at least part of the extent of the fastening element across the hollow construction element.

7. An insert as claimed in any preceding claim including, at at least one region where the load bearing portion is arranged to cooperate with an internal face of a hollow construction element, a projection (14, 16) extending at an angle to the extent of the load bearing portion (38) across a hollow section of a construction element.

8. An insert as claimed claim 7 in which the projection (14, 16) is arranged to cooperate (18,20) with an inner side of a hollow construction element extending at an angle to opposed sides that the load bearing portion is arranged to cooperate with.

9. An insert as claimed in any preceding claim configured to enable two fastening elements to pass through a hollow construction element.

10. An assembly comprising a fastening element attached to a hollow section construction element reinforced with a reinforcing insert as claimed in any of claims 1 to 9.
